# EUROPÄISCHE PATENTANMELDUNG

(11) **EP 0 843 243 A2**
(43) Veröffentlichungstag der Anmeldung: **20.05.1998**
(21) Anmeldenummer: 97119451.9
(22) Anmeldetag: 06.11.1997
(51) Int. Cl.: G05B 19/414

(54) **Antriebssystem mit integrierter Leistungselektronik und integrierter Antriebsregelung mit optimierter Verbindungstechnik und Komponentenverteilung**

(30) Priorität: 19.11.1996 DE 29620124 U
(71) Anmelder: SIEMENS AKTIENGESELLSCHAFT, 80333 München (DE)
(72) Erfinder: Schwesig, Günter, Dipl.-Ing. (FH), 91054 Erlangen (DE)

(57) **Zusammenfassung**

Der Verbindungsaufwand für herkömmliche Antriebssysteme mit integrierter Leistungselektronik und integrierter Antriebsregelung ist herkömmlicher Weise sehr hoch. Daher wird in vorliegender Erfindung ein solches Antriebssystem geschaffen, bei dem sämtliche Leistungsleitungen, Stromversorgungsleitungen und Kommunikationsleitungen über einen einzigen Klemmkasten (K) bereitgestellt werden. Auf diese Weise ist ein Kaskadieren von mehreren solchen Antriebssystemen in Bus-Verbindungstechnik möglich. Desweiteren erfolgt die Komponentenverteilung auf eine Weise, daß eine höchstmögliche Standardisierung und Modularisierung solcher Antriebssysteme erreicht werden kann. Beispielsweise wird beim Einsatz von Gebersystemen die ganze oder ein Großteil der Geberelektronik mit in das Antriebssystem integriert. Es ist die Nutzung des Gleichzeitigkeitsfaktors möglich, so daß die Pulswiderstandsleistung minimiert werden kann.

## Beschreibung

Die Erfindung betrifft ein Antriebssystem mit integrierter Leistungselektronik, welche ein Wechselrichtersystem umfaßt, und integrierter Antriebsregelung.

Aus Gründen einer gewünschten Standardisierung und Modularisierung von elektrischen Antrieben werden häufig Antriebssysteme konzipiert, bei denen die Leistungselektronik für beispielsweise ein Umrichtersystem und die Antriebsregelung in den Antrieb selbst integriert sind. Dies reduziert den Aufwand bei der Montage und Installation. Ein solches Motor/Umrichtersystem wird herkömmlicherweise über Klemmkastenanschlüsse oder Stecker direkt ans Netz angeschlossen. Eine Hochladung des Zwischenkreises des Umrichters erfolgt in der Regel über Vorladewiderstände und Schütze bzw. über den Einsatz von gesteuerten Gleichrichtern, wobei eine Netzgleichrichtung in der Regel in jedem Motor separat durchgeführt wird. Auch ein für den Abbremsvorgang erforderlicher Pulswiderstand ist herkömmlicherweise jedem einzelnen Motor zugeordnet. So muß jeder Pulswiderstand für die maximale Pulsleistung ausgelegt werde. Eine Nutzung des Gleichzeitigkeitsfaktors, z.B. wenn ein Motor motorisch und ein anderer generatorisch betrieben wird, wodurch eine geringere Verlustleistung möglich wäre, ist so nicht möglich.

Die Kommunikation, z.B. eine Drehzahlsollwertvorgabe, zu übergeordneten Steuerungssystemen, z.B. einer numerischen Steuerung einer Werkzeugmaschine, erfolgt in der Regel über einen separaten Anschluß wie beispielsweise ein separates Kupfer-Kabel mit entsprechender Schirmtechnik.

Solche herkömmlichen Antriebssysteme mit integrierter Leistungselektronik und Antriebsregelung weisen häufig keine Möglichkeit zur Energierückspeisung ins Netz auf. Die Elektronikstromversorgung, z.B. für die Antriebsregelung, wird herkömmlicherweise aus der Netzspannung selbst im Motor/Umrichtersystem erzeugt. Dies hat zur Folge, daß bei einer Trennung vom Netz über beispielsweise externe Schalter oder Schütze diese Elektronikstromversorgung nicht mehr vorhanden ist. Dadurch kann die Antriebsregelung bei einer Trennung des Leistungsteils vom Netz nicht im Betrieb bleiben. Bei einer Trennung vom Netz entfällt so die Möglichkeit einer weiteren Regelung des elektrischen Antriebes, was Gefahren für Mensch und Maschine nachsichziehen kann.

Darüber hinaus ist mit den im vorangehenden beschriebenen herkömmlichen Motor/Umrichtersystemen der entsprechende Verkabelungsaufwand sehr hoch, da für jedes solches Antriebssystem erneut eine separate Verbindung zur übergeordneten Spannungsversorgung und zur übergeordneten Steuerung notwendig ist.

Aufgabe der vorliegenden Erfindung ist es daher, ein solches Antriebssystem mit integrierter Leistungselektronik und integrierter Antriebsregelung zu schaffen, bei dem der Verkabelungsaufwand beim Anschluß mehrerer solcher Antriebssysteme im Vergleich zu den im vorangehenden geschilderten Antriebssystemen verringert wird. Darüber hinaus soll bei einer Trennung der integrierten Leistungselektronik vom Netz die Antriebsregelung weiterhin im Betrieb bleiben können. Desweiteren soll eine Energierückspeisung ins Netz möglich sein und der eingangs geschilderte Gleichzeitigkeitsfaktor genutzt werden können.

Gemäß der vorliegenden Erfindung wird diese Aufgabe durch ein Antriebssystem mit integrierter Leistungselektronik, welche ein Wechselrichtersystem umfaßt, und integrierter Antriebsregelung mit den folgenden Merkmalen gelöst:
1.1 einem einzelnen Klemmkasten oder Stecker mit Anschlußmöglichkeit für:
1.2 einen Zwischenkreisspannungsanschluß für eine zentrale Netz-Einspeisung oder Netz-Ein/Rückspeisung,
1.3 Kommunikationsleitungen zu einer übergeordneten Steuerung,
1.4 einen Stromversorgungsanschluß, über den die Antriebsregelung, eine Motorbremsansteuerung sowie bedarfsweise ein direktes und/oder indirektes Meßsystem mittels einer zentralen Elektronikstromversorgung versorgbar sind.

In einer ersten vorteilhaften Ausgestaltung des Antriebssystemes gemäß der vorliegenden Erfindung wird eine besonders effektive Möglichkeit der Verbindung solcher Antriebssysteme gemäß der vorliegenden Erfindung ermöglicht. Dies geschieht durch folgendes weiteres Merkmal:
2.1 jedes Antriebssystem ist mit seinem Klemmkasten oder Stecker in Bus-Verbindungstechnik über andere gleichartige Antriebssysteme mit übergeordneten Komponenten verbindbar.

In einer weiteren vorteilhaften Ausgestaltung des Antriebssystemes gemäß der vorliegenden Erfindung wird der Verbindungsaufwand und damit der Aufwand bei der Montage und Installation durch folgendes Merkmal zusätzlich verringert:
3.1 die Verbindung in Bustechnik zwischen zwei Antriebssystemen oder zwischen einem Antriebssystem und den übergeordneten Komponenten ist über ein einzelnes Spezialkabel vornehmbar, in dem Leistungsleitungen, Stromversorgungsleitungen und Kommunikationsleitungen zusammengefaßt sind.

In einer weiteren vorteilhaften Ausgestaltung des Antriebssystemes gemäß der vorliegenden Erfindung werden elektromagnetische Störeinflüsse reduziert und ein Übersprechen zwischen den Kommunikationsleitungen verhindert. Dies geschieht durch folgendes weiteres Merkmal:
4.1 die Kommunikationsleitungen sind im Spezialkabel und bezüglich der Anschlußmöglichkeit im Klemmkasten in Lichtwellenleitertechnik ausgeführt.

In einer weiteren vorteilhaften Ausgestaltung des Antriebssystemes gemäß der vorliegenden Erfindung wird der Verbindungsaufwand bei Montage und Installation für solche Antriebsysteme weiter verringert, die unter Verwendung eines direkten oder indirekten Meßsystemes betrieben werden. Dies geschieht durch folgendes weiteres Merkmal:
5.1 ein direktes und/oder indirektes Meßsystem ist direkt an die Antriebsregelung des Antriebssystems anschließbar, wobei die Signalaufbereitung und Auswertung von Meßsignalen in der Antriebsregelung selbst vornehmbar ist.

In einer weiteren vorteilhaften Ausgestaltung des Antriebssystemes gemäß der vorliegenden Erfindung erfolgt eine weiterreichende Modularisierung, indem auch erforderliche Gebersysteme mit in das Antriebssystem einbezogen werden können. Dies geschieht durch folgendes weiteres Merkmal:
6.1 bei Einsatz eines Gebersystemes zur Erfassung der Motorlage und/oder Motordrehzahl ist die ganze oder ein Großteil der Geberelektronik auf die Baugruppe der internen Leistungselektronik und Antriebsregelung verlagerbar.

In einer weiteren vorteilhaften Ausgestaltung des Antriebssystemes gemäß der vorliegenden Erfindung werden exemplarbedingte Eigenschaften des eingesetzten Motors in dem Antriebssystem selbst bereitgestellt, was eine Standardisierung bzw. Modularisierung solcher Antriebssysteme weiter vereinfacht. Dies geschieht durch folgendes weiteres Merkmal:
7.1 Leistungsteilparameter und/oder Motorparameter und/oder exemplarbedingte elektromechanische Unzulänglichkeiten des Motors sowie bedarfsweise des Gebersystems sind zu Korrekturzwecken in einem auf der Baugruppe der integrierten Leistungselektronik und Antriebsregelung angeordneten Speichermittel hinterlegbar.

In einer weiteren vorteilhaften Ausgestaltung des Antriebssystemes gemäß der vorliegenden Erfindung wird eine besonders vorteilhafte Möglichkeit zur Bildung eines Gesamtkonzeptes mit Netzversorgung und einem oder mehreren Antriebssystemen geschaffen. Dies geschieht durch folgendes weiteres Merkmal:
8.1 jedes Antriebssystem ist mit seinem Klemmkasten oder Stecker in Bus-Verbindungstechnik über andere gleichartige Antriebssysteme an eine zentrale Spannungsversorgung mit einem zentralen Netzgleichrichter oder Wechselrichter und einem zentralen Pulswiderstand anschließbar.

Weitere Vorteile und Einzelheiten der vorliegenden Erfindung ergeben sich anhand eines im folgenden näher erläuterten Ausführungsbeispieles und in Verbindung mit den Figuren. Es zeigen im einzelnen:
- FIG 1: ein Blockschaltbild der integrierten Leistungselektronik und Antriebsregelung mit dem Klemmkasten zur Veranschaulichung der erforderlichen Anschlüsse,
- FIG 2: eine Prinzipskizze zur Verschaltung von Antriebssystemen gemäß der vorliegenden Erfindung in Bus-Verbindungstechnik.

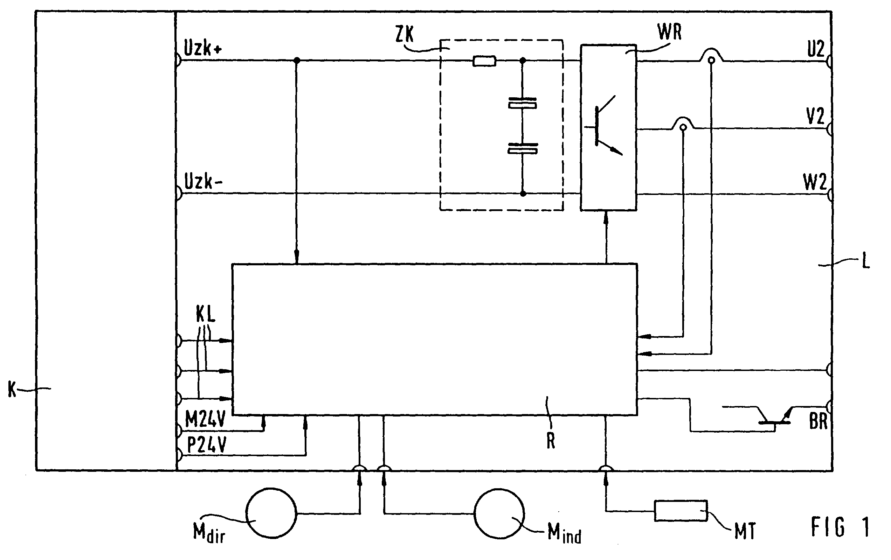

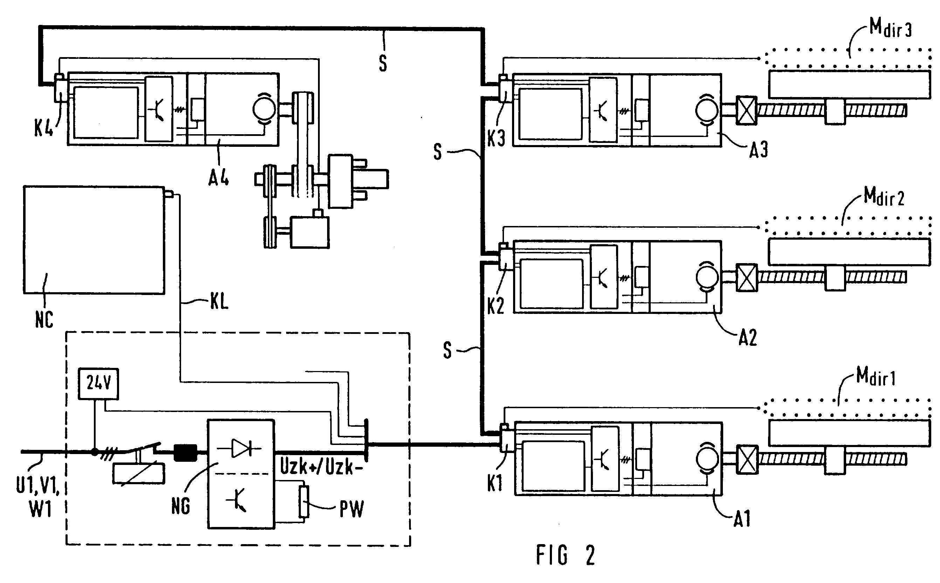

Soweit in den Darstellungen nach der FIG 2 Elemente mit gleicher Funktionalität wie in der Darstellung gemäß FIG 1 gezeigt sind, sind solche gleichen Elemente mit gleichem Bezugszeichen gekennzeichnet. Gleiche Elemente stellen jedoch nicht zwangsläufig dieselben dar.

In der Darstellung gemäß FIG 1 ist ein Blockschaltbild der integrierten Leistungselektronik L und der integrierten Antriebsregelung R mit dem einzelnen Klemmkasten K gezeigt, über den ein Anschluß eines Antriebssystemes mit integrierter Leistungselektronik und Antriebsregelung erfolgt. Dazu sind alle zum Anschluß erforderlichen Leitungen an den Klemmkasten K geführt.

Die integrierte Leistungselektronik L weist einen Wechselrichter WR mit einem Zwischenkreis ZK und entsprechende Zwischenkreisanschlüsse Uzk+ und Uzk- zur Spannungsversorgung auf, welche an den Klemmkasten K geführt sind. Am Wechselrichter WR der integrierten Leistungselektronik L stehen die Ausgangsspannungen U2,V2 und W2 zur Ansteuerung des Motors (nicht gezeigt) bereit. Diese Anschlüsse sind selbstverständlich nicht an den Klemmkasten K geführt, da ein entsprechender elektrischer Antrieb direkt mit der Leistungselektronik L und der Antriebsregelung R verbunden ist und mit diesen eine Einheit als Antriebssystem bildet. Die Zwischenkreisspannungsanschlüsse Uzk+ und Uzk- sind für einen Betrieb mit einer zentralen Netz-Ein- oder Netz-Ein/Rückspeisung an den Klemmkasten K geführt. Über diese Anschlüsse erfolgt eine Hochladung des Zwischenkreises ZK über einen externen Pulswiderstand PW (in FIG 2 gezeigt).

Zusätzlich sind Stromversorgungsanschlüsse M24V und P24V für eine Spannungsversorgung bzw. Stromversorgung der integrierten Antriebsregelung R vorgesehen, welche ebenfalls an den einzigen Klemmkasten K geführt sind. Daneben sind zusätzlich Kommunikationsleitungen KL zum Informationsaustausch mit einer übergeordneten Steuerung (nicht gezeigt) von der integrierten Antriebsregelung R an den Klemmkasten K geführt.

Die integrierte Leistungselektronik L und die integrierte Antriebsregelung R ist mit dem der besseren Übersichtlichkeit halber nicht gezeigten Motor zu einem integrierten Antriebssystem verbunden, wobei alle zum Betrieb notwendigen Anschlüsse an den einzigen Klemmkasten K geführt sind, über den ein Anschluß des so modularisierten Antriebssystemes erfolgt.

Daneben weist die Einheit mit der integrierten Leistungselektronik L und die integrierten Antriebsregelung R noch Anschlußmöglichkeiten auf, über die bedarfsweise ein direktes Meßsystem M_{dir} und ein indirektes Meßsystem M_{ind} sowie andere Meldekontakte für beispielsweise Meßtaster MT vorgesehen sind. Da solche direkten oder indirekten Meßsysteme in der Regel ebenfalls fest mit einem solchen Antriebssystem verbunden sind, erfolgt deren Anschluß nicht über den Klemmkasten K, sondern direkt an die Platine mit der integrierten Leistungselektronik L und der integrierten Antriebsregelung R.

Auf diese Weise besteht auch die Möglichkeit, solche direkten oder indirekten Meßsysteme über die Stromversorgungsanschlüsse M24V und P24V ebenfalls mitzuversorgen. Das gleiche gilt bezüglich einer durch die integrierte Antriebsregelung R bedarfsweise vorgesehenen Motorbremsansteuerung BR. Eine solche Motorbremse ist ebenfalls fest in dem Antrieb integriert. Die Stromversorgung dieser Motorbremse kann somit ebenfalls, wie im vorangehenden geschildert, über die integrierte Leistungselektronik L und integrierte Antriebsregelung R erfolgen. Das gleiche gilt für einen bedarfsweise vorgesehenen Lüfter (nicht gezeigt).

Die integrierte Leistungselektronik L, das integrierte Antriebssystem R, ein eventuelles direktes oder indirektes Meßsystem M_{dir} oder M_{ind} und der elektrische Antrieb selbst, sei es mit oder ohne Motorbremse, bilden somit ein modularisiertes Antriebssystem. Sämtliche Anschlüsse zum Betrieb dieses Antriebssystemes erfolgen über die im vorangehenden beschriebenen Anschlüsse über den einzigen Klemmkasten K.

Da die Elektronikstromversorgung der integrierten Antriebsregelung R somit zentral über die Stromversorgungsanschlüsse M24V und P24V erfolgt, und darüber hinaus auch für eine Motorbremsansteuerung BR sowie ein direktes oder indirektes Meßsystem verwendet wird, bleibt die integrierte Antriebsregelung R auch bei einer Trennung des Leistungsteiles L vom Netz U1,V1 und W1 in Betrieb. Dies bietet den Vorteil, daß der elektrische Antrieb auch im Falle einer Trennung vom Netz steuerbar bleibt und beispielsweise gezielt abgebremst werden kann. Daher muß auch keine herkömmliche sogenannte 6-Leiteranschlußtechnik vorgesehen werden, welche mit einem hohen Verkabelungsaufwand verbunden ist.

Aufgrund der weiteren Anschlußmöglichkeiten für ein direktes Meßsystem M_{dir} oder ein indirektes Meßsystem M_{ind} besteht beim Einsatz von einem Gebersystem zur Erfassung der Motorlage und/oder Motordrehzahl die Möglichkeit, die ganze oder einen Großteil der Geberelektronik ebenfalls auf der Baugruppe für die integrierte Leistungselektronik L und die integrierte Antriebsregelung R zu verlagern. Auf diese Weise kann ein noch höherer Integrationsgrad für ein Antriebssystem gemäß der vorliegenden Erfindung erreicht werden. Daneben läßt sich so die Signalaufbereitung und Auswertung von direkten Meßsystemen M_{dir} ebenfalls über die integrierte Antriebsregelung R im Antriebssystem selbst vornehmen.

Über den einzigen Klemmkasten K und die darin bereitgestellten Anschlüsse kann nun der Anschluß und die Verbindung mehrerer wie im vorangehenden geschilderten Antriebssysteme in Form einer Bus-Verbindungstechnik erfolgen. Auf diese Weise läßt sich der Verbindungs- und Leitungsaufwand gegenüber einer herkömmlichen sternförmigen Verbindungstechnik erheblich reduzieren. Im Vergleich zu einem direkten Netzanschluß läßt sich so der Verkabelungsaufwand von drei (Netzphasen U1, V1, W1) auf zwei Leitungen reduzieren. Dadurch sind auch die erforderlichen Leitungsquerschnitte geringer. Der ansonsten für jeden Antrieb erforderliche Netzgleichrichter kann zentralisiert werden, wodurch Kosten und Platz im Antriebssystem eingespart werden.

Zur Veranschaulichung ist in der Darstellung gemäß FIG 2 eine Prinzipskizze zur Verschaltung von Antriebssystemen gemäß der vorliegenden Erfindung in Bus-Verbindungstechnik gezeigt. Dargestellt sind vier Antriebssysteme A1 bis A4, welche den im vorangehenden dargestellten prinzipiellen Aufbau besitzen. Jedes dieser Antriebssysteme A1 bis A4 besitzt einen Klemmkasten K1 bis K4. Im zugrundeliegenden Ausführungsbeispiel - dem Einsatz in einer numerisch gesteuerten Werkzeugmaschine, wobei die Antriebssysteme A1 bis A3 zum Antrieb eines Werkzeugtisches, das Antriebssystem A4 als Werkzeugspindel eingesetzt wird - erfolgt die Hochladung des Zwischenkreises über einen zentralen Pulswiderstand PW. Dadurch, daß für den Bremsbetrieb ein zentraler Pulswiderstand PW nd eine zentrale Pulswiderstandsansteuerung vorgesehen sind, kann der Gleichzeitigkeitsfaktor genutzt werden und so die Pulswiderstandsleistung kleiner dimensioniert werden. Dies wird möglich, da beispielsweise ein Antriebssystem im generatorischen Betrieb zum motorischen Betrieb eines anderen Antriebssystems beiträgt. Auch bleibt die Einspeisung bezüglich der Leistung und des Einspeisekonzeptes - aktive oder passive Rückspeisung bei Bremsbetrieb - skalierbar.

Desweiteren weisen alle Antriebssysteme A1 bis A4 otional jeweils ein direktes Meßsystem M_{dir1} bis M_{dir4} auf. Dazu sind die jeweiligen direkten Meßsysteme M_{dir1} bis M_{dir4} direkt an die jeweilige integrierte Antriebsregelung des jeweiligen Antriebssystemes A1 bis A4 angeschlossen. Dabei können somit kurze Leitungslängen erreicht werden, da die Meßssysteme in der Regel in der Nähe des Antriebs installiert sind.

Die im Klemmkasten K1 des Antriebssystemes A1 bereitgestellten Anschlüsse sind nun an eine zentrale Netzversorgung mit zentralem Netzgleichrichter geführt, der über die Netzphasen U1,V1,W1 angesteuert wird und ausgangsseitig eine Zwischenkreisspannung über die Spannungsversorgungsleitungen Uzk+ und Uzk- bereitstellt. Aus dem Netz U1,V1,W1 wird auch eine entsprechende Stromversorgung 24V für die Elektronikstromversorgung bereitgestellt. Darüber hinaus erfolgt ein Anschluß über Kommunikationsleitungen KL an eine übergeordnete Steuerung NC.

Die Verbindung zwischen den genannten übergeordneten Komponenten und dem Klemmkasten K1 des Antriebssystemes A1 erfolgt über nur ein Spezialkabel S, indem die Leistungsleitungen Uzk+ und Uzk-, die Stromversorgungsleitungen P24V und M24V für die integrierte Antriebsregelung sowie die Kommunikationsleitungen KL zusammengefaßt sind. Die weiteren Antriebssysteme A2 bis A4 werden nun busmäßig mit dem ersten Antriebssystem A1 über das geschilderte Spezialkabel S angeschlossen, indem ausgehend vom Klemmkasten K1 über das Spezialkabel S die genannten Leitungen an den Klemmkasten K2 geführt werden, von diesem über ein weiteres Spezialkabel S an den Klemmkasten K3 usw. Auf diese Art und Weise wird jedes weitere Antriebsystem über seinen jeweiligen Klemmkasten gewissermaßen in den Bus, welcher sämtliche erforderlichen Leitungen zusammenfaßt, eingeschleift.

Zur Reduzierung von elektromagnetischen Störungen sowie Übersprechen sind die Kommunikationsleitungen KL in dem genannten Spezialkabel S in Lichtwellenleitertechnik ausgeführt. Ein entsprechendes Kupferkabel oder ein anderes metallisches Kabel mit geeigneter Schirmung läßt sich jedoch ebenfalls einsetzen.

Da die vom Prinzip her gleich aufgebauten Antriebssysteme A1 bis A4 jedoch exemplarbedingte elektromechanische Unzulänglichkeiten des Motors und auch eines eventuellen Gebersystemes aufweisen können, werden solche Parameter zur Korrektur in einem Speicher hinterlegt, welcher ebenfalls auf der Bauteilgruppe für die integrierte Leistungselektronik L und die integrierte Antriebsregelung A angeordnet ist. Über diesen lassen sich solche exemplarbedingte Parameter korregieren, so daß die modularisierten und auch standardisierten Antriebssysteme A1 bis A4 beliebig gegeneinander ausgetauscht werden können. Zusätzlich lassen sich selbstverständlich auch Leistungsteilparameter und andere Maschinenteilparameter in diesem Speicher hinterlegen.

Auf diese Weise erhält man standardisierte und modularisierte integrierte Antriebssysteme, welche hinsichtlich der Verbindungstechnik und der Komponentenverteilung optimiert sind. Dadurch wird die Anzahl zusätzlicher externer Komponenten verringert, die Handhabung bei der Installation vereinfacht, elektromagnetische Störeinflüsse weitgehendst ausgeschaltet und so die Kosten minimiert und die Logistik bezüglich der Handhabung verbessert. Darüber hinaus muß weniger Leistungselektronik im Antriebssystem installiert werden, wodurch das Anbauvolumen geringer wird.

Die in der vorangehenden Beschreibung eines vorteilhaften Ausführungsbeispieles dargestellten Merkmale und Komponenten sind sowohl jeweils für sich als auch in Kombination realisierbar.

## Patentansprüche

1. Antriebssystem mit integrierter Leistungselektronik (L), welche ein Wechselrichtersystem umfaßt, und integrierter Antriebsregelung (R) mit folgenden Merkmalen:
1.1 einem einzelnen Klemmkasten (K,K1...K4) oder Stecker mit Anschlußmöglichkeit für:
1.2 einen Zwischenkreisspannungsanschluß (Uzk+,Uzk-) für eine zentrale Netz-Einspeisung oder Netz-Ein/Rückspeisung (E/R),
1.3 Kommunikationsleitungen (KL) zu einer übergeordneten Steuerung (NC),
1.4 einen Stromversorgungsanschluß (M24V,P24V), über den die Antriebsregelung (R), eine Motorbremsansteuerung (BR) sowie bedarfsweise ein direktes (M_{dir}) und/oder indirektes (M_{ind}) Meßsystem mittels einer zentralen Elektronikstromversorgung versorgbar sind.

2. Antriebssystem nach Anspruch 1, mit folgendem weiteren Merkmal:
2.1 jedes Antriebssystem (A1...A4) ist mit seinem Klemmkasten (K1...K4) oder Stecker in Bus-Verbindungstechnik über andere gleichartige Antriebssysteme mit übergeordneten Komponenten (Uzk+,Uzk-,24V,KL) verbindbar.

3. Antriebssystem nach Anspruch 2, mit folgendem weiteren Merkmal:
3.1 die Verbindung in Bustechnik zwischen zwei Antriebssystemen oder zwischen einem Antriebssystem und den übergeordneten Komponenten (Uzk+,Uzk-,24V,KL) ist über ein einzelnes Spezialkabel (S) vornehmbar, in dem Leistungsleitungen (Uzk+,Uzk-), Stromversorgungsleitungen (M24V,N24V) und Kommunikationsleitungen (KL) zusammengefaßt sind.

4. Antriebssystem nach Anspruch 3, mit folgendem weiteren Merkmal:
4.1 die Kommunikationsleitungen (KL) sind im Spezialkabel (S) und bezüglich der Anschlußmöglichkeit im Klemmkasten (K1...K4) in Lichtwellenleitertechnik ausgeführt.

5. Antriebssystem nach einem der vorangehenden Ansprüche, mit folgendem weiteren Merkmal:
5.1 ein direktes (M_{dir1}, M_{dir1}...M_{dir4}) und/oder indirektes (M_{ind}) Meßsystem ist direkt an die Antriebsregelung (R) des Antriebssystems anschließbar, wobei die Signalaufbereitung und Auswertung von Meßsignalen in der Antriebsregelung (R) selbst vornehmbar ist.

6. Antriebssystem nach einem der vorangehenden Ansprüche, mit folgendem weiteren Merkmal:
6.1 bei Einsatz eines Gebersystemes zur Erfassung der Motorlage und/oder Motordrehzahl ist die ganze oder ein Großteil der Geberelektronik auf die Baugruppe (L,R) der internen Leistungselektronik und Antriebsregelung verlagerbar.

7. Antriebssystem nach einem der vorangehenden Ansprüche, mit folgendem weiteren Merkmal:
7.1 Leistungsteilparameter und/oder Motorparameter und/oder exemplarbedingte elektromechanische Unzulänglichkeiten des Motors sowie bedarfsweise des Gebersystems sind zu Korrekturzwecken in einem auf der Baugruppe (L,R) der integrierten Leistungselektronik und Antriebsregelung angeordneten Speichermittel hinterlegbar.

8. Antriebssystem nach einem der vorangehenden Ansprüche, mit folgendem weiteren Merkmal:
8.1 jedes Antriebssystem (A1...A4) ist mit seinem Klemmkasten (K1...K4) oder Stecker in Bus-Verbindungstechnik über andere gleichartige Antriebssysteme an eine zentrale Spannungsversorgung mit einem zentralen Netzgleichrichter (NG) oder Wechselrichter und einem zentralen Pulswiderstand (PW) anschließbar.
